# FASCICULE DE BREVET EUROPEEN

(11) **EP 3 697 637 B1**
(45) Date de publication et mention de la délivrance du brevet: **09.11.2022**
(21) Numéro de dépôt: 18779393.0
(22) Date de dépôt: 04.10.2018
(51) Int. Cl.: B60J 7/12, E05F 15/41, E05F 15/70

(54) **SYSTÈME ET PROCÉDÉ DE COMMANDE D'UN VÉHICULE AUTOMOBILE MUNI D'AU MOINS UNE COUVERTURE AMOVIBLE**
SYSTEM UND VERFAHREN ZUR STEUERUNG EINES KRAFTFAHRZEUGS MIT MINDESTENS EINER ABNEHMBAREN ABDECKUNG
SYSTEM AND METHOD FOR CONTROLLING A MOTOR VEHICLE EQUIPPED WITH AT LEAST ONE REMOVABLE COVERING

(30) Priorité: 16.10.2017 FR 1759675
(43) Date de publication de la demande: 26.08.2020
(73) Titulaire: Innovaction Technologies, 42110 Epercieux St Paul (FR)
(72) Inventeur: SAJNOVIC, Srecko, 42300 Roanne (FR)
(74) Mandataire: Casalonga
(86) Numéro de dépôt international: PCT/EP2018/077004
(87) Numéro de publication internationale: WO 2019/076641

(56) Documents cités:
- EP-A2- 2 338 717
- WO-A1-2014/012895
- WO-A1-2016/205860
- WO-A1-2017/100716
- WO-A1-2017/152675
- WO-A1-2017/169128
- DE-A1-102015 000 396
- US-A- 4 585 981

## Description

L'invention a pour domaine technique les systèmes de couverture amovible, et notamment la commande de tels systèmes.

Un système de couverture amovible permet de couvrir ou de découvrir la benne ou la remorque d'un camion en entraînant des arceaux insérés dans une bâche de couverture. Les arceaux sont généralement supportés par un rail et fixés à un câble d'entraînement qui permet de les déplacer dans un sens ou dans l'autre sous l'action d'un moteur.

De l'état de la technique, on connaît la demande de brevet FR1457845 divulguant une couverture amovible pour benne de camion.

Les documents WO 2017/152675 Al, WO 2017/100716 A1, WO 2016/205860 Al et DE 10 2015 000396 Al sont également connus dans l'art antérieur.

Bien que permettant une fermeture et une ouverture de benne qui soit plus fiable que l'état de l'art antérieur, le système de couverture amovible décrit dans ce document nécessite d'être activé par le conducteur. Toutefois, il est courant que ces systèmes de couverture ne soient pas activés par le conducteur, par oubli, manque de temps ou manque d'intérêt pour les gains apportés.

Par ailleurs, l'automatisation des premiers camions de transport laisse entrevoir la disparition progressive du conducteur. Dans un tel cas, il demeure nécessaire que la benne ou la remorque soit couverte ou découverte au départ ou à l'arrivée d'un camion automatisé sur le lieu de chargement.

Il existe donc un besoin pour un système de commande d'une couverture amovible dont l'actionnement soit au moins en partie automatisé.

L'invention a pour objet un camion selon l'objet de la revendication 1.

Le véhicule peut être muni d'une unité de commande électronique apte à transmettre sur requête la vitesse de déplacement du véhicule, le système de commande comprenant un premier moyen de comparaison apte à comparer la vitesse de déplacement du véhicule à un seuil de vitesse caractéristique d'un déplacement du véhicule sur route et à émettre un signal à destination du moyen de commande lorsque la vitesse du véhicule franchit le seuil de vitesse.

Le véhicule est muni d'un dispositif de positionnement apte à déterminer la position du véhicule,
le système de commande comprenant un deuxième moyen de comparaison apte à comparer périodiquement la position du véhicule avec une position mémorisée et à émettre un signal à destination du moyen de commande lorsque la distance entre les deux positions franchit un seuil de distance prédéfini.

Le système de couverture amovible peut être muni d'un moyen de repérage de position de la couverture amovible,
le système de commande comprend un troisième moyen de comparaison de la position de la couverture amovible à une position prédéterminée de la couverture amovible reçue du moyen de repérage de position de la couverture amovible et apte à émettre un signal à destination du moyen de commande lorsque la position de la couverture amovible correspond à la position prédéterminée ainsi qu'une mémoire,
le moyen de commande étant apte à mémoriser dans la mémoire la position du véhicule lors de la première réception du signal du troisième moyen de comparaison depuis une période de temps prédéterminée.

La position prédéterminée de la couverture amovible peut être la position ouverte ou fermée.

La position mémorisée du véhicule peut être une position du véhicule reçue de l'opérateur.

Le système de couverture amovible peut être muni d'un moyen de repérage de position de la couverture amovible et d'un quatrième moyen de comparaison de la position de la couverture amovible reçue du moyen de repérage de position à la position requise par le signal de commutation,
le quatrième moyen de comparaison étant également apte à stopper le signal de commutation à destination de la couverture amovible si la position de la couverture amovible reçue du moyen de repérage de position de la couverture amovible correspond à la position requise par le signal de commutation.

Le système de couverture amovible peut être muni d'un moyen de mesure de retour d'effort permettant de déterminer si un objet s'oppose au mouvement de la couverture amovible,
le système de commande comprenant alors un cinquième moyen de comparaison apte à comparer la mesure de retour d'effort à une valeur de seuil d'effort d'endommagement et à émettre un signal à destination du moyen de commande si la mesure de retour d'effort est supérieure à la valeur de seuil,
le moyen de commande étant alors apte à émettre un signal d'arrêt de la couverture amovible à réception du signal du cinquième moyen de comparaison.

Le système de commande peut comprendre des moyens d'émission aptes à émettre un signal d'erreur à destination d'un opérateur lorsque le moyen de commande reçoit un signal en provenance du cinquième moyen de comparaison.

Le système de commande peut comprendre des moyens de réception aptes à recevoir un signal d'un opérateur,
le moyen de commande étant alors apte à interrompre l'émission de signaux de commutation à destination de la couverture amovible à réception d'un signal d'un opérateur signalant un chargement hors gabarit par les moyens de réception.

L'opérateur peut être le conducteur du véhicule, le conducteur à distance du véhicule piloté comme un drone, le programme ou le système de pilotage du véhicule autonome ou semi-autonome.

L'invention a également pour objet un procédé de commande d'un camion selon l'une quelconque des revendications 1 à 10, comprenant des étapes selon la revendications 11.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un système de couverture amovible, et
- la figure 2 illustre les principaux éléments d'un système de commande de couverture amovible.

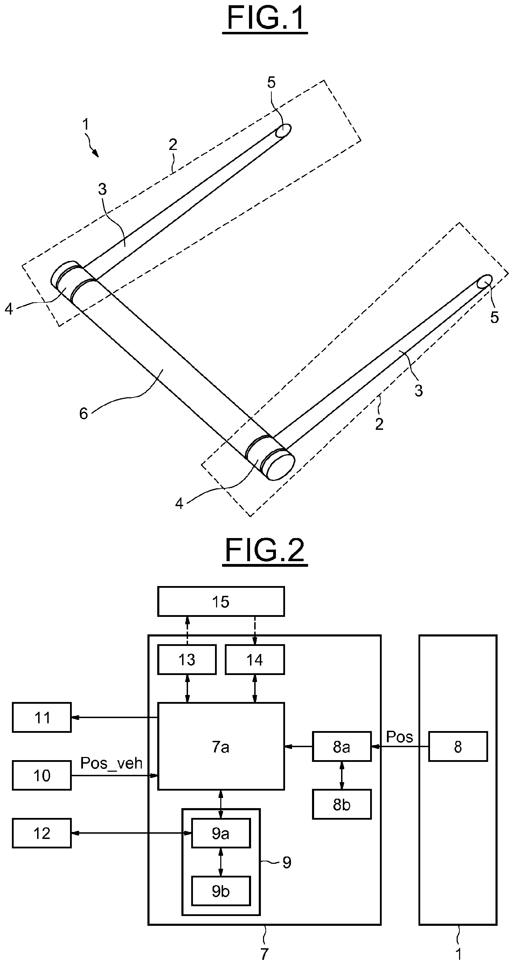

La figure 1 illustre un système de couverture amovible selon le document FR1457845. Le système de couverture amovible 1 comprend deux dispositifs de déplacement 2 comprenant chacun un câble d'entraînement 3 coopérant avec une partie d'une roue avant 4 et une roue arrière 5. Le câble d'entraînement 3 soutient des arceaux insérés dans une bâche. Un moteur 6 permet l'entraînement des câbles 3 par l'intermédiaire des roues avant 4. On notera que le moteur 6 et les roues avant 4 sont contenus dans un même élément. On citera comme exemple un cylindre muni de roues à ses extrémités et d'un moteur axial inséré dans son volume intérieur. Par leurs mouvements, les câbles d'entraînement 3 permettent de déplacer les arceaux et la bâche, couvrant ou découvrant la benne en fonction du sens de déplacement.

A la différence de l'état de la technique antérieur, un tel système de couverture amovible 1 permet d'éviter une perte de tension des câbles d'entraînement 3.

Les arceaux du système de couverture amovible sont souples et déformables. En d'autres termes, les arceaux sont flexibles et aptes à se déformer élastiquement sous un impact. En se déformant, les arceaux flexibles absorbent la majeure partie d'un impact, minimisant la quantité d'énergie transmise au reste du système. Ainsi minimisés, les impacts ont une influence encore plus réduite sur la tension des câbles d'entraînement 3. Les arceaux flexibles peuvent être réalisés, par exemple, en matériaux composites.

Afin que le déploiement de la couverture amovible ne nécessite qu'une intervention minime de l'opérateur, on propose un système de commande 7 permettant de commuter la fermeture de la couverture amovible 1 de façon autonome. Un tel système de commande est illustré par la figure 2.

Le système de commande 7 comprend un moyen de commande 7a connecté au système de couverture amovible 1 afin de pouvoir en actionner la fermeture soit par commande directe du moteur 6 soit par l'intermédiaire d'un actionneur du moteur 6, et connecté à l'unité de commande électronique 9 du véhicule.

Le moyen de commande 7a requiert de façon périodique la vitesse de déplacement du véhicule Vveh auprès de l'unité de commande électronique 9.

Le système de commande 7 comprend un premier moyen de comparaison 9a de la vitesse du véhicule Vveh à un seuil de vitesse. Lorsque le véhicule atteint une vitesse supérieure à un seuil de vitesse caractéristique d'un déplacement sur route, par exemple 40km/h, on considère que le véhicule a quitté la zone de chargement. Lorsque tel est le cas, le premier moyen de comparaison 9a émet un signal à destination du moyen de commande 7a qui émet alors un signal de fermeture à destination du système de couverture amovible 1.

Dans un mode de réalisation particulier, le moyen de commande 7a est connecté à un dispositif de positionnement 10 apte à déterminer la position du véhicule Pos_veh.

Le système de commande 7 comprend un deuxième moyen de comparaison 10a de la position du véhicule Pos_veh à une position mémorisée.

Lorsque la distance entre la position du véhicule Pos_veh et la position mémorisée Pos_open provenant est supérieur à un seuil de distance prédéfini, on considère que le véhicule est sorti de la zone de chargement, et le moyen de commande 7a émet un signal de la fermeture de la couverture amovible.

La position mémorisée est mémorisée dans un système d'aide à la navigation routière 11, notamment avant le départ du véhicule ou reçue de l'opérateur.

Afin de définir la position mémorisée, le système de commande 7 peut requérir périodiquement la position du véhicule, ainsi que la position de la couverture amovible. Lorsque pour la première fois, depuis une période prédéterminée, par exemple depuis la dernière fermeture de la couverture amovible, un signal indique que la couverture amovible est ouverte, par exemple par l'intermédiaire du troisième moyen de comparaison 8a, le moyen de commande 7a mémorise la position du véhicule dans une mémoire 7b. Afin de déterminer la temporalité du signal reçu du troisième moyen de comparaison 8a, une horloge interne, et des moyens additionnels de mémorisation et comparaison peuvent être requis.

Alternativement, le système de commande peut tenir compte de la différence de distance entre la position mémorisée Pos_open et la position du véhicule Pos_veh par rapport au seuil de distance et de la comparaison de la vitesse du véhicule Vveh par rapport au seuil de vitesse, de sorte à conclure que le véhicule s'est suffisamment éloigné du lieu de chargement et a atteint une vitesse de déplacement sur route pour commander la fermeture de la couverture amovible.

Le moyen de commande 7a combine alors les signaux reçus du premier moyen de comparaison 9a et du deuxième moyen de comparaison 10a, par l'intermédiaire par exemple d'un opérateur logique ET. Ce mode de réalisation permet de réduire le seuil de distance de sorte que la couverture amovible soit fermée plus rapidement.

La commande de la couverture amovible décrite ci-dessus peut toutefois être mise en échec si le chargement du véhicule excède la profondeur de la benne du véhicule couverte par la couverture amovible, ou si une partie du chargement dépasse d'une remorque munie d'un tel système de couverture amovible. Dans un tel cas, la requête périodique de fermeture de la couverture amovible par le système de commande pourrait mener à l'endommagement ou à la destruction de la couverture amovible du fait des chocs des arceaux contre le chargement hors gabarit. Bien que des arceaux flexibles soient prévus dans le système de couverture amovible, des chocs répétés pourraient provoquer leur casse.

Il est ainsi prévu que le système de couverture amovible 1 soit muni d'un moyen de mesure de retour d'effort 12 permettant de déterminer si un objet empêche le déplacement de la couverture amovible. Dans un tel mode de réalisation, le système de commande 7 comprend un cinquième moyen de comparaison 12a de la mesure de retour d'effort à une valeur de seuil d'effort d'endommagement et qui émet un signal d'erreur si la mesure de retour d'effort est supérieure ou égale à une valeur de seuil d'effort d'endommagement.

Si tel est le cas, le cinquième moyen de comparaison 12a émet un signal d'erreur à destination du moyen de commande 7a qui émet à son tour un signal d'arrêt à destination du système de couverture amovible 1 et un signal de défaillance à destination de l'opérateur OP. Le système de commande 7 permet ainsi d'éviter l'endommagement de la couverture amovible tout en informant l'opérateur OP.

Par opérateur, on entend le conducteur du véhicule traditionnel, le conducteur à distance du véhicule piloté comme un drone, le programme ou le système de pilotage du véhicule lorsque celui-ci est autonome ou semi-autonome.

Le système de commande 7 peut comprendre des moyens de réception 14, tels qu'une antenne radiofréquence et les moyens de décodage correspondant permettant de recevoir un signal provenant de l'opérateur OP signalant un chargement hors gabarit. A réception d'un tel signal, le moyen de commande 7a interrompt ses interactions avec le système de couverture amovible 1 jusqu'à réception d'un signal indiquant que le chargement hors gabarit a été déchargé.

Dans un mode de réalisation particulier, le système de couverture amovible 1 est muni d'un moyen de repérage de position 8 de la couverture amovible, tel que l'association d'un onglet codeur et d'un détecteur correspondant et un quatrième moyen de comparaison 8b de la position de la couverture amovible reçue du moyen de repérage de position 8 de la couverture amovible correspond à la position requise par le signal de commutation provenant du moyen de commande 7a à destination de la couverture amovible.

Par position de la couverture amovible, on entend la position ouverte, la position fermée, une ouverture de plusieurs pourcents (entre 0% et 100%) de la couverture amovible ou une fermeture de plusieurs pourcents (entre 100% et 0%) de la couverture amovible.

Le quatrième moyen de comparaison 8b ne permet alors la transmission du signal de fermeture à destination du système de couverture amovible 1 de sorte que la couverture amovible soit amenée à une position fermée uniquement que si la position Pos est différente de la position fermée requise. Le quatrième moyen de comparaison 8b peut être réalisé par exemple par l'association d'un moyen de comparaison de la position fermée à la position du signal de commande, connecté en sortie à la grille d'un transistor recevant en entrée le signal de fermeture du moyen de commande 7a et connecté en sortie à la couverture amovible 1.

La fermeture de la couverture amovible par le système de commande a été décrite ci-dessus. Toutefois, des étapes similaires et éléments peuvent être associés à l'ouverture de la couverture amovible. Il en découle que les seuils de distance et de vitesse définis pour l'ouverture peuvent différer des seuils de distance et de vitesse pour la fermeture.

Par ailleurs, bien que la couverture amovible présente un mouvement assez rapide, l'ouverture de la couverture amovible en anticipation du lieu de déchargement ou de chargement permet de gagner du temps lors d'opérations intensives en transport, telles qu'elles sont couramment réalisées en génie civil.

Le système de commande d'un camion muni d'une couverture amovible a été décrit ci-dessus en rapport avec un véhicule muni d'une benne dont l'ouverture est refermée par la couverture amovible.

L'invention s'applique également à un camion muni d'une remorque refermée par au moins une couverture amovible, sur le toit et/ou sur au moins un côté du camion.

L'invention s'applique enfin à un camion dont le toit et/ou au moins un côté sont refermés par au moins une couverture amovible.

## Revendications

1. Camion muni d'au moins une couverture amovible configurée de sorte à permettre de couvrir ou de découvrir le toit et/ou au moins un coté du camion,
le camion comprenant un système de commande comprenant
un système d'aide à la navigation routière (11) comprenant une position mémorisée,
un dispositif de positionnement (10) apte à déterminer la position du camion,
au moins un moyen de comparaison de la position du camion à la position mémorisée en fonction d'un seuil de position de sorte à déterminer que le véhicule a franchi une limite d'une zone de chargement/déchargement, et
un moyen de commande (7a) apte à commander l'ouverture de la couverture amovible lorsque le camion est dans une zone de chargement/déchargement tel que déterminé par le au moins un moyen de comparaison (8a,8b,9a,10a,12a),
le moyen de commande (7a) étant également apte à commander la fermeture de la couverture amovible lorsque le camion est hors d'une zone de chargement/déchargement tel que déterminé par le au moins un moyen de comparaison (8a,8b,9a,10a,12a).

2. Camion selon la revendication 1, comprenant une unité de commande électronique (9) apte à transmettre sur requête la vitesse de déplacement du véhicule,
le système de commande (7) comprend un premier moyen de comparaison (9a) apte à comparer la vitesse de déplacement du véhicule à un seuil de vitesse caractéristique d'un déplacement du véhicule sur route et à émettre un signal à destination du moyen de commande (7a) lorsque la vitesse du véhicule franchit le seuil de vitesse.

3. Camion selon la revendication 1 ou 2, dans lequel le système de couverture amovible (1) est muni d'un moyen de repérage de position (8) de la couverture amovible,
le système de commande comprend un troisième moyen de comparaison (8a) de la position de la couverture amovible à une position prédéterminée de la couverture amovible reçue du moyen de repérage de position (8) de la couverture amovible et apte à émettre un signal à destination du moyen de commande (7a) lorsque la position de la couverture amovible correspond à la position prédéterminée ainsi qu'une mémoire (7b),
le moyen de commande (7a) étant apte à mémoriser dans la mémoire (7b) la position du véhicule lors de la première réception du signal du troisième moyen de comparaison (8a) depuis une période de temps prédéterminée.

4. Camion selon la revendication 3, dans lequel la position prédéterminée de la couverture amovible est la position ouverte ou fermée.

5. Camion selon la revendication 1 ou 2, dans lequel la position mémorisée du véhicule est une position du véhicule reçue de l'opérateur.

6. Camion selon l'une quelconque des revendications précédentes, dans lequel le système de couverture amovible (1) est muni d'un moyen de repérage de position (8) de la couverture amovible et d'un quatrième moyen de comparaison (8b) de la position de la couverture amovible reçue du moyen de repérage de position (8) à la position requise par le signal de commutation,
le quatrième moyen de comparaison (8b) étant également apte à stopper le signal de commutation à destination de la couverture amovible si la position de la couverture amovible reçue du moyen de repérage de position (8) de la couverture amovible correspond à la position requise par le signal de commutation.

7. Camion selon l'une quelconque des revendications précédentes, dans lequel le système de couverture amovible (1) est muni d'un moyen de mesure de retour d'effort (12) permettant de déterminer si un objet s'oppose au mouvement de la couverture amovible,
le système de commande comprenant un cinquième moyen de comparaison (12a) apte à comparer la mesure de retour d'effort à une valeur de seuil d'effort d'endommagement et à émettre un signal à destination du moyen de commande (7a) si la mesure de retour d'effort est supérieure à la valeur de seuil,
le moyen de commande (7a) étant apte à émettre un signal d'arrêt de la couverture amovible à réception du signal du cinquième moyen de comparaison (12a).

8. Camion selon la revendication 7, dans lequel le système de commande comprend des moyens d'émission (13) aptes à émettre un signal d'erreur à destination d'un opérateur lorsque le moyen de commande (7a) reçoit un signal en provenance du cinquième moyen de comparaison (12a).

9. Camion selon l'une quelconque des revendications précédentes, dans lequel le système de commande comprend des moyens de réception (14) aptes à recevoir un signal d'un opérateur,
le moyen de commande (7a) étant apte à interrompre l'émission de signaux de commutation à destination de la couverture amovible à réception d'un signal d'un opérateur signalant un chargement hors gabarit par les moyens de réception (14).

10. Camion selon l'une quelconque des revendications 5, 8 ou 9, dans lequel l'opérateur est le conducteur du véhicule, le conducteur à distance du véhicule piloté comme un drone, le programme ou le système de pilotage du véhicule autonome ou semi-autonome.

11. Procédé de commande d'un camion muni d'au moins une couverture amovible selon l'une quelconque des revendications 1 à 10, **caractérisé par le fait qu'**il comprend des étapes au cours desquelles :
on détermine la position du camion,
on compare la position du camion à une position mémorisée en fonction d'un seuil de position de sorte à déterminer que le véhicule a franchi une limite d'une zone de chargement/déchargement, dans laquelle la couverture amovible doit être ouverte, et
on commande la fermeture de la couverture amovible lorsque le véhicule est dans une zone de chargement/déchargement, et
on commande l'ouverture de la couverture amovible lorsque le véhicule est hors d'une zone de chargement/déchargement.

## Patentansprüche

1. Lastkraftwagen, der mit mindestens einer abnehmbaren Abdeckung versehen ist, die derart konfiguriert ist, um es zu ermöglichen, das Dach und/oder mindestens eine Seite des Lastkraftwagens zu bedecken oder freizulegen,
wobei der Lastkraftwagen ein Steuersystem umfasst, das Folgendes umfasst
ein System zur Straßen-Navigationshilfe (11), das eine gespeicherte Position umfasst,
eine Positionierungsvorrichtung (10), die imstande ist, die Position des Lastkraftwagens zu bestimmen,
mindestens ein Mittel zum Vergleichen der Position des Lastkraftwagens mit der gespeicherten Position in Abhängigkeit von einer Positionsschwelle, derart, um zu bestimmen, dass das Fahrzeug eine Grenze einer Lade-/Entladezone überschritten hat, und
ein Steuermittel (7a), das imstande ist, die Öffnung der abnehmbaren Abdeckung anzusteuern, wenn der Lastkraftwagen, in einer Lade-/Entladezone ist, wie durch das mindestens eine Mittel zum Vergleichen (8a, 8b, 9a, 10a, 12a) bestimmt wird,
wobei das Steuermittel (7a) auch imstande ist, das Schließen der abnehmbaren Abdeckung anzusteuern, wenn der Lastkraftwagen, außerhalb einer Lade-/Entladezone ist, wie durch das mindestens eine Mittel zum Vergleichen (8a, 8b, 9a, 10a, 12a) bestimmt wird.

2. Lastkraftwagen nach Anspruch 1, umfassend eine elektronische Steuereinheit (9), die imstande ist, auf Anfrage die Fortbewegungsgeschwindigkeit des Fahrzeugs zu übertragen,
wobei das Steuersystem (7) ein erstes Mittel zum Vergleichen (9a) umfasst, das imstande ist, die Fortbewegungsgeschwindigkeit des Fahrzeugs mit einer Geschwindigkeitsschwelle zu vergleichen, die charakteristisch für eine Fortbewegung des Fahrzeugs auf der Straße ist, und ein Signal an das Steuermittel (7a) auszugeben, wenn die Geschwindigkeit des Fahrzeugs die Geschwindigkeitsschwelle überschreitet.

3. Lastkraftwagen nach Anspruch 1 oder 2, wobei das abnehmbare Abdeckungssystem (1) mit einem Ortungsmittel für die Position (8) des abnehmbaren Abdeckungssystems versehen ist,
wobei das Steuersystem ein drittes Mittel zum Vergleichen (8a) der Position der abnehmbaren Abdeckung mit einer vorbestimmten Position der abnehmbaren Abdeckung umfasst, die von dem Ortungsmittel für die Position (8) der abnehmbaren Abdeckung empfangen wird, und imstande ist, ein Signal an das Steuermittel (7a) auszugeben, wenn die Position der abnehmbaren Abdeckung der vorbestimmten Position, sowie einem Speicher (7b) entspricht,
wobei das Steuermittel (7a) imstande ist, in dem Speicher (7b) die Position des Fahrzeugs beim ersten Empfang des Signals von dem dritten Mittel zum Vergleichen (8a) seit einem vorbestimmten Zeitraum zu speichern.

4. Lastkraftwagen nach Anspruch 3, wobei die vorbestimmte Position der abnehmbaren Abdeckung die offene oder geschlossene Position ist.

5. Lastkraftwagen nach Anspruch 1 oder 2, wobei die gespeicherte Position des Fahrzeugs eine Position des Fahrzeugs ist, die von dem Bediener empfangen wird.

6. Lastkraftwagen nach einem der vorstehenden Ansprüche, wobei das abnehmbare Abdeckungssystem (1) mit einem Ortungsmittel für die Position (8) des abnehmbaren Abdeckungssystems versehen ist, und einem vierten Mittel zum Vergleichen (8b) der Position der abnehmbaren Abdeckung, die von dem Ortungsmittel für die Position (8) empfangen wird, mit der Position, die von dem Umschaltsignal benötigt wird,
wobei das vierte Mittel zum Vergleichen (8b) auch imstande ist, das Umschaltsignal zur abnehmbaren Abdeckung zu stoppen, wenn die Position der abnehmbaren Abdeckung, die von dem Ortungsmittel für die Position (8) empfangen wird, der Position, die von dem Umschaltsignal benötigt wird, entspricht.

7. Lastkraftwagen nach einem der vorstehenden Ansprüche, wobei das abnehmbare Abdeckungssystem (1) mit einem Mittel zum Messen einer Kraftrückmeldung (12) versehen ist, das es ermöglicht, zu bestimmen, ob sich ein Gegenstand der Bewegung der abnehmbaren Abdeckung entgegenstellt,
wobei das Steuersystem ein fünftes Mittel zum Vergleichen (12a) umfasst, das imstande ist, die Messung einer Kraftrückmeldung mit einem Beschädigungskraftschwellenwert zu vergleichen, und ein Signal an das Steuermittel (7a) auszugeben, wenn die Messung einer Kraftrückmeldung über dem Schwellenwert liegt,
wobei das Steuermittel (7a) imstande ist, bei Empfang des Signals des fünften Mittels zum Vergleichen (12a), ein Haltesignal für die abnehmbare Abdeckung auszugeben.

8. Lastkraftwagen nach Anspruch 7, wobei das Steuersystem Ausgabemittel (13) umfasst, die imstande sind, ein Fehlersignal an einen Bediener auszugeben, wenn das Steuermittel (7a) ein Signal von dem fünften Mittel zum Vergleichen (12a) empfängt.

9. Lastkraftwagen nach einem der vorstehenden Ansprüche, wobei das Steuersystem Empfangsmittel (14) umfasst, die imstande sind, ein Signal von einem Bediener zu empfangen, wobei das Steuermittel (7a) imstande ist, die Ausgabe von Umschaltsignalen an die abnehmbare Abdeckung bei Empfang eines Signals eines Bedieners durch die Empfangsmittel (14) zu unterbrechen, das auf eine Ladung mit Übergröße hinweist.

10. Lastkraftwagen nach einem der Ansprüche 5, 8 oder 9, wobei der Bediener der Lenker des Fahrzeugs, der Fernlenker des Fahrzeugs, das wie eine Drohne gesteuert wird, das Programm oder das Lenksystem des autonomen oder halbautonomen Fahrzeugs ist.

11. Verfahren zum Steuern eines Lastkraftwagens, der mit mindestens einer abnehmbaren Abdeckung nach einem der Ansprüche 1 bis 10 versehen ist, **dadurch gekennzeichnet, dass** es die Schritte umfasst, im Laufe derer:
die Position des Lastkraftwagens bestimmt wird,
die Position des Lastkraftwagens mit einer gespeicherten Position in Abhängigkeit von einer Positionsschwelle derart verglichen wird, um zu bestimmen, dass das Fahrzeug eine Grenze einer Lade-/Entladezone überschritten hat, in der die abnehmbare Abdeckung zu öffnen ist, und
das Schließen der abnehmbaren Abdeckung angesteuert wird, wenn das Fahrzeug in einer Lade-/Entladezone ist, und
das Öffnen der abnehmbaren Abdeckung angesteuert wird, wenn das Fahrzeug außerhalb einer Lade-/Entladezone ist.

## Claims

1. A truck equipped with at least one removable covering configured so as to cover or uncover the roof and/or at least one side of the truck,
the truck comprising a control system comprising a road navigation aid system (11) comprising a stored position,
a positioning device (10) capable of determining the position of the truck,
at least one means for comparing the position of the truck with the stored position according to a position threshold so as to determine that the vehicle has crossed a limit of a loading/unloading area, and
a control means (7a) capable of controlling the opening of the removable covering when the truck is in a loading/unloading area as determined by the at least one comparison means (8a, 8b, 9a, 10a, 12a),
the control means (7a) also being capable of controlling the closing of the removable covering when the truck is outside a loading/unloading area as determined by the at least one comparison means (8a, 8b, 9a, 10a, 12a).

2. The truck according to claim 1, comprising an electronic control unit (9) capable of transmitting upon request the speed of movement of the vehicle,
the control system (7) comprises a first comparison means (9a) capable of comparing the speed of movement of the vehicle with a speed threshold characteristic of the movement of the vehicle on the road and of emitting a signal to the control means (7a) when the vehicle speed crosses the speed threshold.

3. The truck according to claim 1 or 2, wherein the removable covering system (1) is equipped with a means (8) for locating the position of the removable covering,
the control system comprises a third means (8a) for comparing the position of the removable covering with a predetermined position of the removable covering received from the means (8) for locating the position of the removable covering and capable of emitting a signal intended for the control means (7a) when the position of the removable covering corresponds to the predetermined position as well as a memory (7b),
the control means (7a) being able to memorise in the memory (7b) the position of the vehicle during the first reception of the signal from the third comparison means (8a) for a predetermined period of time.

4. The truck according to claim 3, wherein the predetermined position of the removable covering is the open or closed position.

5. The truck according to claim 1 or 2, wherein the stored position of the vehicle is a position of the vehicle received from the operator.

6. The truck according to any one of the preceding claims, wherein the removable covering system (1) is equipped with a means (8) for locating the position of the removable covering and a fourth means (8b) for comparing the position of the removable covering received from the position locating means (8) to the position required by the switching signal,
the fourth comparison means (8b) also being capable of stopping the switching signal intended for the removable covering if the position of the removable covering received from the means (8) for locating the position of the removable covering corresponds to the position required by the switching signal.

7. The truck according to any one of the preceding claims, wherein the removable covering system (1) is equipped with a force feedback measuring means (12) allowing to determine whether an object opposes the movement of the removable covering,
the control system comprising a fifth comparison means (12a) capable of comparing the force feedback measurement with a damage force threshold value and of emitting a signal intended for the control means (7a) if the force feedback measurement is greater than the threshold value, the control means (7a) being capable of emitting a signal to stop the removable covering upon receiving the signal from the fifth comparison means (12a).

8. The truck according to claim 7, wherein the control system comprises emission means (13) capable of emitting an error signal to an operator when the control means (7a) receives a signal from of the fifth comparison means (12a).

9. The truck according to any one of the preceding claims, wherein the control system comprises receiving means (14) capable of receiving a signal from an operator,
the control means (7a) being able to interrupt the emission of switching signals to the removable covering upon receiving a signal from an operator indicating an out-ofgauge load by the receiving means (14).

10. The truck according to any one of claims 5, 8 or 9, wherein the operator is the driver of the vehicle, the remote driver of the vehicle piloted as a drone, the program or the system for piloting the autonomous or semiautonomous vehicle.

11. A method for controlling a truck equipped with at least one removable covering according to any one of claims 1 to 10, **characterised in that** it comprises steps during which:
the position of the truck is determined,
the position of the truck is compared with a stored position according to a position threshold so as to determine that the vehicle has crossed a limit of a loading/unloading area, wherein the removable covering must be opened, and
the closing of the removable covering is controlled when the vehicle is in a loading/unloading area, and
the opening of the removable covering is controlled when the vehicle is outside a loading/unloading area.
